# EUROPEAN PATENT SPECIFICATION

(11) **EP 2 776 917 B1**
(45) Date of publication and mention of the grant of the patent: **06.10.2021**
(21) Application number: 12795592.0
(22) Date of filing: 09.11.2012
(51) Int. Cl.: G06F 7/10

(54) **INDICATOR DEVICE**
INDIKATORVORRICHTUNG
DISPOSITIF INDICATEUR

(30) Priority: 09.11.2011 GB 201119336; 10.07.2012 GB 201212272
(43) Date of publication of application: 17.09.2014
(73) Proprietor: Clarke, Stephen William, Clitheroe Lancashire, BB7 9QW (GB)
(72) Inventor: CLARKE, Stephen William, Clitheroe Lancashire BB7 9QW (GB); SHARPLES, Thomas Benjamin, Langho Lancashire BB6 8EJ (GB)
(74) Representative: HGF
(86) International application number: PCT/GB2012/052789
(87) International publication number: WO 2013/068757

(56) References cited:
- WO-A1-2008/155575
- GB-A- 2 327 668
- GB-A- 2 435 731
- US-A- 380 166

## Description

The present invention relates to indicator devices and in particular, but not exclusively, to indicator devices for use with dispensing apparatus.

WO2008/155575A1 discloses a dispensing apparatus in the form of an upper loading chamber separated from a lower dispensing chamber by a movable gate or shutter. Items are removed from the lower dispensing chamber and when it requires replenishing the gate or shutter is withdrawn, which allows the contents of the upper chamber to fall into the lower dispensing chamber. Withdrawal of the gate or shutter also releases a spring-loaded indicating member, which provides an alert that the upper, loading chamber is empty.

The apparatus in WO 2008/15557 A1 is particularly useful for dispensing small, frequently used items such as bolts, nuts, screws and the like in which a batch of products are available. However, it is difficult to adapt for use with larger, infrequently used individual items such as replacement vehicle seats, steering wheels and the like. Whilst it would be possible to increase the size of the apparatus to accommodate larger items, this would be very costly.

It would therefore be preferable to be able to use existing storage facilities for larger, individual items, such as racks, storage components and the like, but to have an automatic alert when replenishment of stock is necessary.

GB2435731A discloses an electronic tag comprising an electronic circuit adapted to transmit readable identifier information to an interrogation device and a shielding means movable between a first position in which communication with the interrogation device is inhibited and second position in which communication with the interrogation device is permitted. The invention also relates to a system of remote monitoring of articles by means of the electronic tag and a kit of parts thereof.

US380166A discloses an indicator for hotels, comprising a frame having an intermediate fixed part bearing a desired inscription and horizontally sliding parts moving in guides at the end of the frame, one of the sliding parts being normally concealed. When one or both of the sliding parts are slid into view, the sliding parts having the inscription, in conjunction with the intermediate part, complete a sentence and thereby convey a message.

In accordance with a first aspect of the present invention, there is provided an indicator device comprising:
a base;
a first indicator member displaceable with respect to the base between a first position indicative of a first condition or status and a second position indicative of a second condition or status of the device;
releasable retention means mounted on the base, for retaining the first indicator member in the first position; and
release means projecting from the base and operable from outside the base for releasing the retention means;
wherein the first indicator member moves toward the second position on the release of the retention means.

In one embodiment, the first indicator member moves towards the second position under its own weight on release of the retention means.

Preferably, the first indicator member is displaceable linearly with respect to the base, and preferably in a straight line with respect to the base.

The first indicator member may conveniently be slidably disposed with respect to the base.

The indicator device may further comprise an electronic tag adapted to transmit readable information to an interrogation device and shielding means which prevents communication with the electronic tag wherein the first indicator means is in its first position.

Such an indicator device is self-contained. It may therefore be used to provide a status indication for a wide range of storage devices and is not restricted to use with one or more specific types of storage devices.

The indicator device may further comprise an electronic tag adapted to transmit readable information to an interrogation device and further comprising shielding means which prevents communication with the electronic tag when the first indicator means is in its second position.

The use of one or more electronic tags, e.g. RFID tags, allows the status of the device to be monitored automatically and remotely as well as, or instead of, visually.

The first indicator means preferably comprises shielding means.

Preferably, the electronic tag is adapted to transmit information indicative of a condition or state.

The indicator device may comprise one or more removable and/or replaceable electronic tags.

This allows an indicating device which does not have RFID capability to be modified to be RFID-capable, without having to replace the whole indicating device, It also allows an existing RFID tag to be replaced which might be required, for example, of a change in the identity of the product whose dispensing is being monitored.

The indicator device may comprise one or more electronic tags mounted on a support, e.g. a thin strip or sheet, which is releasably connectible to the device.

The indicator device may comprise one or more electronic tags mounted on a support which is slidably engageable with the device,

In one embodiment, in the first position of the indicator member a second indicator is concealed and in the second position of the first indicator member the second indicator is at least partly exposed.

Preferably, the base comprises a window in which the first indicator member is displaceable.

In one arrangement, when the first indicator member is in its second position, the second indicator is at least partly visible through the window.

The second indicator member may be removable and/or replaceable.

The second indicator member may carry an electronic tag adapted to transmit information indicative of a condition or state.

This would be a convenient way of providing an indicating device which does not have RFID capability to be simply and inexpensively modified to become RFID-capable.

Preferably, when the first indicator member is in the first position it occupies substantially the whole of the window,

The indicator device may further comprise a third indicator member, displaceable with respect to the base between a first position and a second position.

Preferably, when the third indicator member is in its second position, it at least partly conceals the second indicator.

Preferably, the third indicator member is displaceable linearly with respect to the base, preferably in a straight line with respect to the base.

Preferably, the third indicator member is slidably disposed with respect to the base.

The third indicator member is also preferably movable in the window.

The indicator device may further comprise an electronic tag adapted to transmit readable information to an interrogation device and shielding means which prevents communication with the electronic tag when the third indicator means is in its first position.

The indicator device may also comprise an electronic tag adapted to transmit readable information to an interrogation device and further comprising shielding means which prevents communication with the electronic tag when the third indicator means is in its second position.

Preferably, the electronic tag is adapted to transmit the information indicative of a condition or state.

Preferably, the third indicator means comprises shielding means.

The electronic tag may be removable and/or replaceable.

The electronic tag may be mounted on a support, e.g. a thin strip or sheet, which is releasably connectible to the device.

The electronic tag may be mounted on a support which is slidably engageable with the device.

The present invention also includes a container or dispenser fitted with an indicating device according to the present invention.

By way of example only, specific embodiments of the present invention will now be described with reference to the accompanying drawings, in which:-
Figs. 1(a) to 1(c) are front views of an embodiment of status indicating device in accordance with the present invention, shown in three different statuses;
Fig. 2 is a rear review of the status indicating device of Fig. 1 ;
Fig. 3 is an edge-on view of the status indicating device of Fig. 1, looking in the direction of arrow III in Fig. 2;
Figs. 4(a) to 4(c) are rear views of the status indicating device of Fig. 1, with the rear cover removed, corresponding to the statuses of Figs. 1(a) to 1(c) respectively;
Fig. 5 is a front view illustrating the status indicating device of Fig. 1 fitted to a sliding door of a storage compartment;
Figs. 6(a) to 6(c) are front views of a first modified version of the status indicating device of Fig. 1, corresponding to the statuses of Figs. 1(a) to 1(c) respectively;
Figs. 7(a) and 7(b) are front views of a second modified version of the status indicating device of Fig. 1, showing various components of the device in partly-assembled and assembled configurations respectively; and
Figs. 8(a) and 8(b) are edge-on views (showing opposite vertical edges) of the device of Fig. 7.

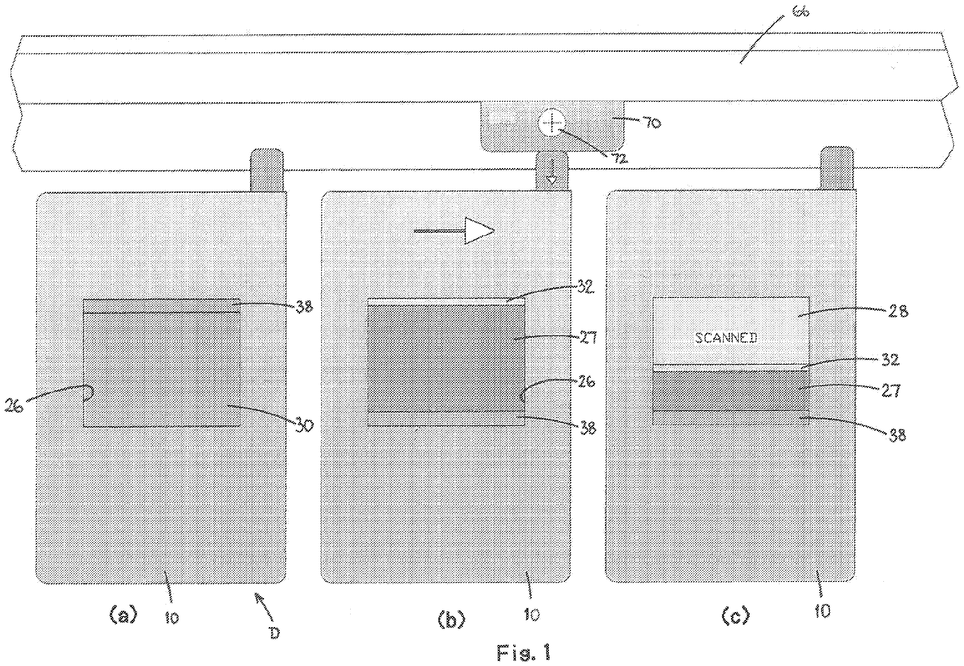

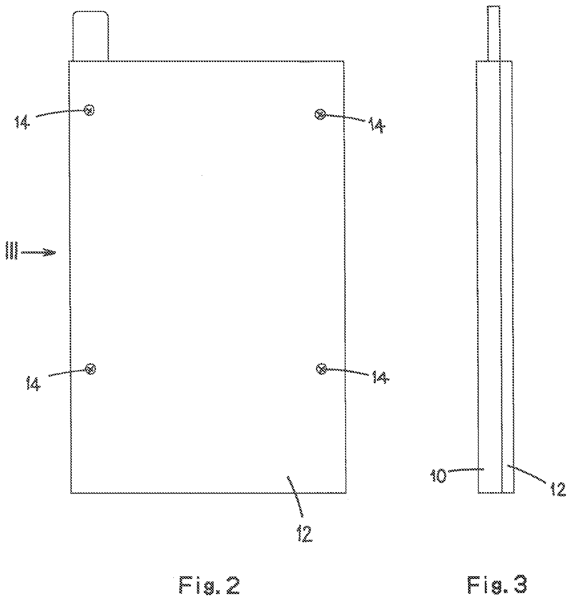

Referring firstly to Figs. 1 to 4, a status indicating device D comprises a base having a planar, rectangular, plastics body 10 and a planar, rectangular, plastics, rear cover 12 which is removably attached to the body 10 by means of four countersunk retaining screws 14 passing through apertures in the rear face of the rear cover 12 and being screw-threadedly received in corresponding recesses 16 in the body 10. A first, longitudinally extending, flat-bottomed rectangular recess 18 is formed in the rear face of the body between a first, continuous post member 20 on one side of the recess, and a lower post member 22 and inner, upper enclosing wall 24 on the opposite side of the recess 18.

A rectangular aperture 25, slightly narrower than the longitudinal recess 18, is formed in the base of the recess 18 and forms a window 26 in the front face of the base 10. The portion of the inner face of the rear cover 12 corresponding to the aperture 24 is coloured as a red rectangle 27 of slightly greater dimensions than those of the aperture 24, as will be explained.

The recess 18 also slidably receives upper and lower rectangular, generally planar plastics slide members 28, 30 which are of the same width and depth as the recess 18. As best seen in Fig. 1, the lowermost edge of the front face of the upper slide member 28 is provided with a transversely extending elongate finger tab 32 of the same width as the window 26 and which projects into the window 26. Movement of the upper slide member 28 upwardly is thereby limited by abutment of the finger tab 32 with the upper edge of the window 26 and downward movement is limited by engagement of a small lug 34 on the front face of the member 28 in an elongate recess 36 in the upper portion of the recess 18.

Similarly, the uppermost edge of the front face of the lower slide member 30 is provided with a transversely extending elongate finger tab 38 of the same width as the window and which projects through the window 26. The finger tab 38 of the lower slide member 30 projects forwardly out of the window 26 and is provided with an elongate recess (not visible) behind its front face which is shaped to receive, and conceal, the finger tab 32 of the upper slide member 28 when the upper and lower slide members 28, 30 are in abutment with each other, as will be explained.

In the embodiment illustrated, the upper slide member 28 is coloured yellow and the lower slide member 30 is coloured green, as will be explained. The front face of one or both of the upper and lower slide members 28, 30 may also bear a message, such as the word "SCANNED" on the front face of the upper slide member 28.

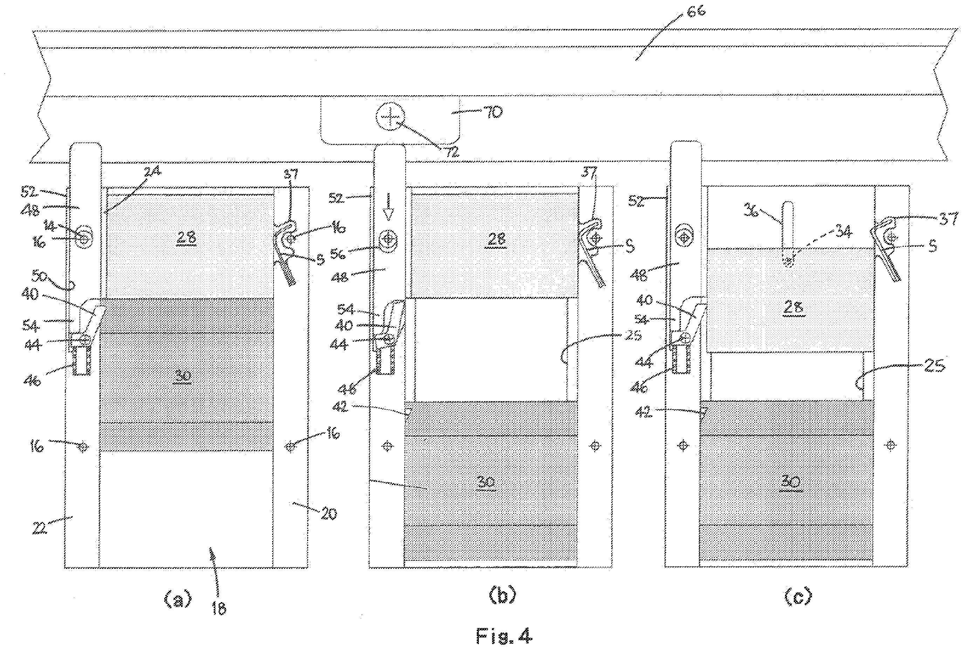

As mentioned above, the upper slide member 28 is slidable between an uppermost position shown in Fig. 1(a), in which the finger tab 32 abuts the upper edge of the window 26, and a lowermost position, shown in Fig. 1(c), as defined by the abutment of the lug 34 with the lower end of the recess 36. An L-shaped spring S, seated in a shallow recess 37 at the upper end of the post member 20, bears against one edge of the upper slide member 28 as it moves from its uppermost position (Figs. 4(a) and (b)) until it reaches its lowermost position (Fig. 4 (c)) and provides a frictional engagement which prevents the upper slide member 28 from inadvertently dropping from its uppermost position,

The lower slide member 30 is slidable between a lowermost position, shown in Figs. 1(b) and 1(c), in which the finger tab 38 abuts the lower edge of the window 26, and in which the red indicating rectangle 25 is substantially fully exposed (Fig. 1(b)) or partly exposed (Fig, 1(c)) through the window 25, and an uppermost position, shown in Fig. 1(a), in which the finger tab 38 abuts the finger tab 32 of the upper slide member 28 when the latter is in its uppermost position, and in which position the red indicating rectangular 25 is completely concealed and the finger tab 32 of the upper slide member is received in the recess behind the finger tab 38 of the lower slide member 30 and is also thereby concealed,

As best seen in Fig. 4, the lower slide member 30 is retained in its uppermost position by means of a spring-loaded pawl or catch 40 which engages with a complementarily-shaped recess 42 in the adjacent edge of the slide member 30. The pawl or catch 40 is pivotally mounted about a pivot pin 44 and is biased towards engagement with the lower slide member 30 (clockwise in Fig. 4) by means of a compression spring 46. The pawl or catch 40 can be pivoted in the opposite direction, out of engagement with the lower slide member 30, by means of a trigger member 48. The trigger member 48 is flat and generally rectangular and is slidably disposed in a channel 50 formed by the inner face of the inner, upper enclosing wall 24 and the inner face of an outer, upper wall portion 52 of the base. The upper end of the trigger member 48 projects out of the upper end of the indicating device and its lower end is provided with a projecting nose portion 54 which engages the pawl or catch 40. Downward movement of the trigger thereby causes the pawl or catch 40 to pivot against the force of the spring 46 (anti-clockwise in Fig. 4) and out of engagement with the recess 42 in the adjacent edge of the lower slide member 20. The trigger 48 is also provided with a slot 56, through which one of the retaining screws 14 passes, the slot 56 being elongated to allow such movement.

As the lower slide member 30 is moved to its uppermost position, the pawl or catch 40 engages with the recess 42 in the adjacent edge of the slide member and retains the slide member 30 in its uppermost position. If the trigger is displaced downwardly, the pawl or catch 40 is disengaged from the lower retaining member 30, which then slides downwardly under its own weight to its lowermost position, shown in Figs, 1(a) and 1(b).

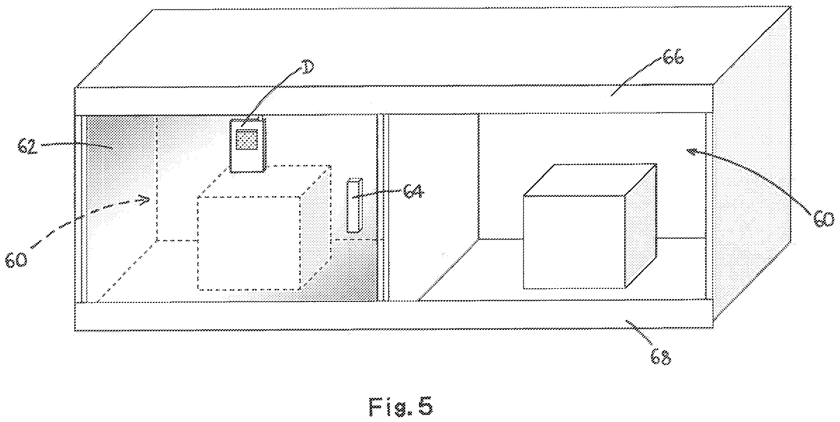

In use, the status indicating device described above is typically installed in a manner such as that illustrated in Fig. 5. Fig. 5 shows two identical storage compartments 60 arranged side by side. A planar transparent plastics sliding door 62 having a handle 64 is mounted on upper and lower tracks 66, 68 and is shaped and dimensioned to be able to cover one of the storage compartments 60. The status indicating device D described above is mounted in the centre of the front face of the sliding door 62 adjacent to its upper edge.

The storage compartments 60 are intended to store identical objects. In use, when both compartments 60 are occupied, the sliding door 62 will be positioned over one of the compartments. The status indicating device D will initially be in the condition shown in Fig. 1(a). In this condition, the green, lower slide member 30 occupies the whole of the window 26, indicating that no action is necessary to restock the storage compartments 60.

If the contents of one of the storage components 60 are removed, this can be achieved without displacing the sliding door 60, from the open or exposed compartment. When it is desired to remove the contents of the other compartment 60, it is necessary to slide the door 62 along the tracks 66, 68 to expose the occupied compartment 60 and to cover the other compartment. As shown in Figs. 1 and 4, the upper track 66 is provided with a cam in the form of a generally cuboidal plastics block 70 secured to the upper track by a screw 72. The block 68 is adapted to engage the projecting portion of the trigger member 48 as the door 62 is slid from in front of one compartment 70 to the other. The lowermost edges of the block 68 are rounded to facilitate the engagement.

As the projecting portion of the trigger member 48 engages the block 70, it is displaced downwardly. As described previously, downward displacement of the trigger member 48 causes the pawl or catch 40 to disengage from the recess 42 in the adjacent edge of the slide member 30, which then slides under its own weight to its lowermost position, as shown in Fig. 1(b). In this position, the red rectangle 27 on the front face of the rear cover plate 12 is exposed and occupies substantially the whole of the window 26, serving as an indication that both the compartments 60 are empty and require refilling. When the person responsible for checking stocks of products observes the red indicator 27, he or she will take the necessary action to restock the compartments. When this action has been taken, the person who has taken the action slides the yellow upper slide member 28 downwards to its lowermost position, shown in Fig. 1(c), using the finger tab 32. This exposes the yellow slide member 28 in about half of the window 26, while still exposing part of the red indicating rectangle 27, serving as an indication that the compartments are still empty but that action has been taken to restock them. As indicated previously, explanatory wording or symbols may be present on one or more of the upper and lower slide members 28, 30 and the red rectangle 27 and since the re-ordering is often achieved by scanning a bar code on the compartment, in the embodiment illustrated the word "SCANNED" is printed on the front face of the upper slide member 28 and is visible when the slide member 28 is in its lowermost position, but not when in its upper position.

When the compartments have been restocked, the upper and lower slide members 28, 30 are slid to their uppermost position, shown in Fig. 1(a) using the finger tab 38 of the lower slide member 30, whereby the green lower slide member 30 completely fills the window 26 again, indicating that no action is required to restock the compartments. The green lower slid member 30 is retained in this position by re-engagement of the pawl or catch 40 with the recess 42 in the edge of the slide member 30, until the trigger member 48 is displaced downwardly again, by sliding the door 62 and engaging the trigger member with the cam 68.

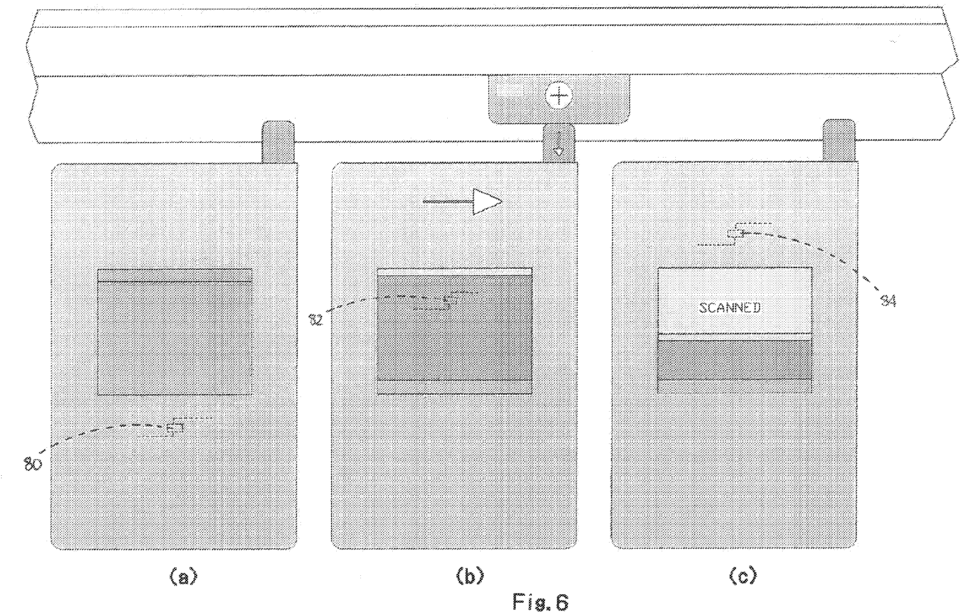

A first modification to the device is illustrated in Fig. 6. The Fig. 6 embodiment includes all of the features of the Fig. 1 embodiment and the same reference numerals have been used to identify the same features.

In addition, however, the device of Fig. 6 has three passive radio frequency identification (RFID) tags 80, 82, 84, shown schematically in the drawings. The RFID tags are conventional and are of the type which, when exposed to the correct RFID signal from a reading device, are activated and transmit information held by the tag to the reading device. The tags 80, 82, 84 are all embedded in the rear plastics cover 12 of the device.

The first tag 80 is located in the region covered by the lower slide member 30 when in its lowermost position (Figs. 6(a) and (c)), the second tag 82 is located in the area of the window 26 covered by the upper slide member when in its lowermost position (Fig. 6(c)) and the third tag 84 is located in the region covered by the upper slide member 28 when in its uppermost position (Fig. 6(a) and (b)). In addition, the rear faces of the upper and lower slide members 28, 30 are each provided with a thin metal layer (not visible) on their undersurface which acts as an electromagnetic shield or screen for any RFID tag 80, 82, 84 over which it is positioned.

When in the condition in Fig. 6(a), therefore, the first tag 80 is not shielded but the second tag 82 is shielded by the lower slide member 30 and the third tag 84 is shielded by the upper slide member 28. Thus, if the indicating device is interrogated by a reader, only a signal from the first tag 80 will be generated, indicating a first condition of the device.

When the lower slide member 30 moves to the position shown in Fig. 6(b), on displacement of the trigger member 48, the first tag 80 is then shielded by the lower slide member 30 and the second tag 82 is no longer shielded. The third tag 84 is still shielded by the upper slide member 28.

When the upper slide member 28 is slid to the position shown in Fig. 6(c), the first tag 80 is still shielded by the lower slide member 30. However, the second tag 82 is then shielded by the upper slide member 28 and the third tag is no longer shielded by the upper slide member 28.

Consequently, interrogation of the device in any of the conditions shown in Figs. 6(a), (b) and (c) will generate a signal from only one of the RFID tags 80, 82, 84 thereby providing an additional automatic, non-visual indication of the condition of the indicator device.

Although three RFID tags 80, 82, 84 have been shown one or two of the tags may be omitted if desired, if less information is required.

One potential shortcoming of the device of Fig, 6 is that the RFID tags are embedded, and therefore form, an integral part of the device. Consequently, the cost of installing (and of purchasing) the RFID tags is incurred even if the end user does not intend to use them.

It would be possible to offer two versions of the device, one without any RFID tags (for those who do not intend to use RFID tags) and one with one or more RFID tags installed (for those intending to use the tags). However, this would increase the cost to the manufacturer and, ultimately, to the purchaser.

Moreover, if a user of devices without RFID tags wished to "upgrade" to devices with the RFID tags, it would be necessary to replace all of the non-RFID devices, which would increase the cost of the exercise.

Furthermore, if the identity of the product being dispensed changes, as may well happen, then it would be necessary either to incur the expense of replacing the device with a new device having one or more tags holding the information corresponding to the new product or to amend the database with which the RFID tags communicate, so that the signal from the RFID tags corresponds to the new product.

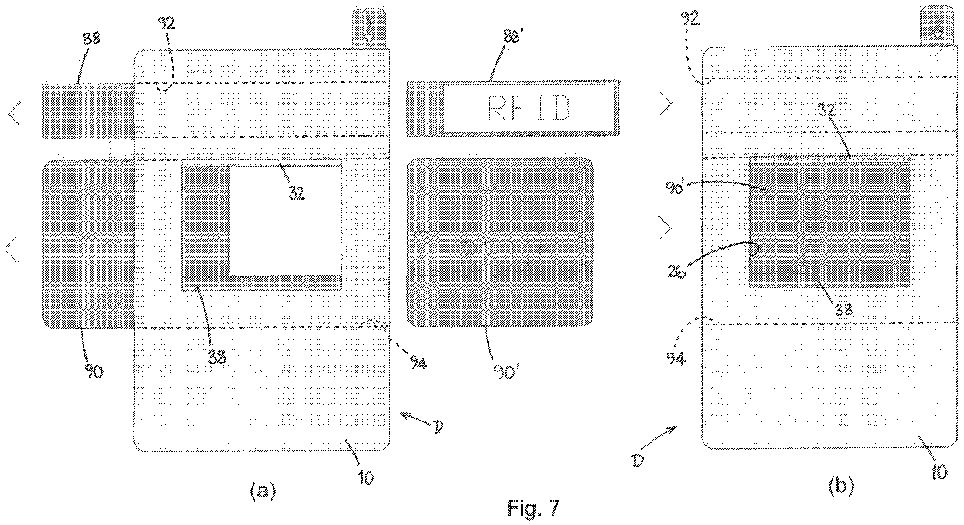

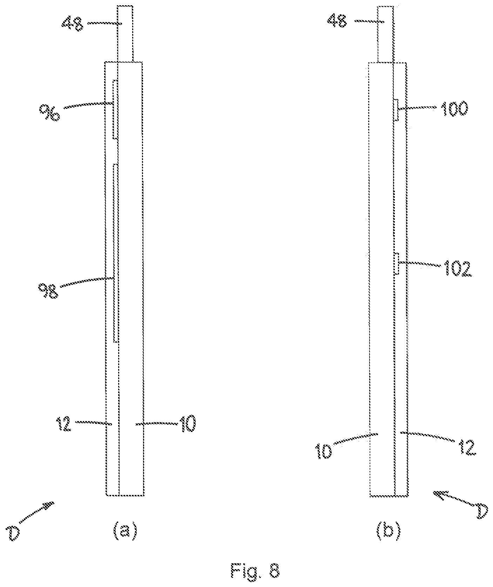

The second modification, shown in Figs. 7 and 8, aims to overcome the potential shortcomings described above, The construction of the variant of Figs. 7 and 8 is very similar to that of Fig. 6 (with the exception that the RFID tag corresponding to the lowermost RFID tag 80 of Fig. 6 has been omitted) and the same reference numerals have been used to identify corresponding features.

As shown in Figs. 7 and 8, two thin rectangular plastic strips 88, 90, can be slidably and removably inserted into complementarily shaped slots 92, 94 extending transversely across the device and terminating at one end (the left-hand end as shown in Fig. 7) in an opening 96, 98 in one of the longer edges of the rear cover 12. Further openings 100, 102 provided at the opposite end of the slots 92, 94 in the other longer edge of the rear cover 12, are smaller than the strips 88, 90 and so do not allow the strips to pass through but allow a tool to be inserted to assist in removing the strips 88, 90 when desired.

If the device does not require RFID tags, then plain strips of plastic 88, 90 (i.e. strips which do not carry an RFID tag) are inserted into the slots 92, 94. The lower strip 90 is coloured red and is visible through the window 26 when the slide member 30 is retained in its uppermost position, in the same way as the red rectangle 27 of the arrangements of Figs. 1 and 6. The upper strip 88 is not visible in use and does not have to be of any particular colour.

On the other hand, if RFID capability is required, then plastic strips 88', 90' are used in place of plain strips 88, 90. The strips 88', 90' are externally identical to the plain strips 88, 90, but each has an RFID tag 82, 84 embedded within it. The device then operates in the same way as the arrangement of Fig. 6.

This also allows a customer to purchase a less expensive non-RFID enabled device 10 and, if RFID capability is required subsequently, to modify it to an RFID-enabled device 10 simply by removing the plain strips 88, 90 and replacing them with the strips 90', 92' which carry an RFID tag. Removal of the strips 88, 90 is facilitated by pushing a tool through the small openings 100, 102 in the edge of the rear cover 12. The ability to replace the non-RFID strips 88, 90 with RFID-enabled strips 88', 90' removes the need for the whole device 10 to be replaced in the event that an "upgrade" to RFID capability is required.

Similarly, in the event of a change in the identity of the product in the storage compartment with which the device D is used, it is not necessary to replace the entire device D or to update the database to which the RFID signal is sent. instead, it is merely necessary to remove the plastic strips 88, 90 carrying the RFID tags 82, 84 (by pushing a tool through the small openings 100, 102 and to replace them with new strips 88', 90' having RFID tags having a different identification code corresponding to the new product.

As a further modification, the red coloured rectangle 27 may always be visible through the window 26 when the slide member is in its uppermost position and a strip 90' carrying an RFID tag 82 may be slid into the device behind the red indicator 27.

The device D may also be modified to have a further removable RFID tag corresponding to the tag 80 of Fig. 6, which is embedded on a further strip similar to strip 88.

In the arrangement of Figs. 7 and 8, all of the RFID tags are removable and/or replaceable. However, it is not necessary for all of the tags to be removable and/or replaceable.

The invention is not restricted to the details of the foregoing embodiments.

For example, although the use of the invention with two side-by-side compartments has been described, this need not be the case. The invention is equally applicable to a door which covers only one storage compartment, and which is "triggered" whenever the door to the compartment is opened, indeed, the invention need not be used with a sliding door but could be used with a conventional hinged door,

The invention is not even restricted to use of the status indicating device with a door.

Moreover, although in the embodiments described the lower slide member 30 falls to its lowermost position under its own weight, it would be possible to use another means of displacement, e.g. a spring which biases the lower slide member 30 to its lowermost position.

## Claims

1. An indicator device (D) comprising:
a base (10);
a first indicator member (30) displaceable with respect to the base between a first position indicative of a first condition or status and a second position indicative of a second condition or status of the device;
**characterized by**:
releasable retention means (40) mounted on the base, for retaining the first indicator member in the first position; and
release means (40) projecting from the base (10) and operable from outside the base for releasing the retention means;
wherein the first indicator member moves toward the second position on the release of the retention means.

2. An indicator device as claimed in claim 1, wherein the first indicator member (30) moves towards the second position under its own weight on release of the retention means.

3. An indicator device as claimed in claim 1 or claim 2, wherein the first indicator member (30) is displaceable linearly with respect to the base and, optionally,
wherein the first indicator member (30) is displaceable in a straight line with respect to the base.

4. An indicator device as claimed in any of the proceeding claims, wherein the first indicator member (30) is slidably disposed with respect to the base.

5. An indicator device as claimed in any of the preceding claims, comprising an electronic tag (82) adapted to transmit readable information to an interrogation device and further comprising shielding means which prevents communication with the electronic tag (82) wherein the first indicator means is in its first position, and/or
comprising an electronic tag (80) adapted to transmit readable information to an interrogation device and further comprising shielding means which prevents communication with the electronic tag (80) when the first indicator means is in its second position.

6. An indicator device as claimed in claim 5, wherein the first indicator means (30) comprises shielding means.

7. An indicator device as claimed in claim 5 or claim 6, wherein the electronic tag (80, 82) is adapted to transmit information indicative of a condition or state.

8. An indicator device as claimed in any of claims 5 to 7, comprising one or more removable and/or replaceable electronic tags and, optionally,
comprising one or more electronic tags (88', 90') mounted on a support which is releasably connectible to the device and, optionally,
comprising one or more electronic tags (88', 90') mounted on a support which is slidably engageable with the device.

9. An indicator device as claimed in any of the preceding claims, wherein in the first position of the first indicator member (30) a second indicator (27) is concealed and in the second position of the first indicator member (30) the second indicator (27) is at least partly exposed and, optionally,
wherein the base comprises a window (26) in which the first indicator member (30) is displaceable and, optionally,
wherein when the first indicator member (30) is in its second position, the second indicator (27) is at least partly visible through the window (26).

10. An indicator device as claimed in claim 9, wherein the second indicator member (90) is removable and/or replaceable and, optionally,
wherein the second indicator member (90') carries an electronic tag adapted to transmit information indicative of a condition or state and/or
wherein when the first indicator member (30) is in the first position it occupies substantially the whole of the window (26).

11. An indicator device as claimed in of claim 9 or 10, further comprising a third indicator member (28), displaceable with respect to the base between a first position and a second position and, optionally,
wherein when the third indicator member (28) is in its second position, it at least partly conceals the second indicator (27), and/or
wherein the third indicator member (28) is displaceable linearly with respect to the base and, optionally,
wherein the third indicator member (28) is displaceable in a straight line with respect to the base.

12. An indicator device as claimed in claim 11, wherein the third indicator member (28) is slidably disposed with respect to the base, and/or
wherein the third indicator member (28) is movable in the window (26).

13. An indicator device as claimed in claim 11 or 12, comprising an electronic tag (82) adapted to transmit readable information to an interrogation device and further comprising shielding means which prevents communication with the electronic tag when the third indicator member (28) is in its first position, and/or
comprising an electronic tag (84) adapted to transmit readable information to an interrogation device and further comprising shielding means which prevents communication with the electronic tag when the third indicator member (28) is in its second position and, optionally,
wherein the electronic tag (82, 84) is adapted to transmit the information indicative of a condition or state, and/or
wherein the third indicator member (28) comprises shielding means.

14. An indicator device as claimed in claim 13, wherein the electronic tag is removable and/or replaceable and, optionally,
wherein the electronic tag is mounted on a support (88', 90') which is releasably connectible to the device and, optionally,
wherein the electronic tag is mounted on a support (88' 90') which is slidably engageable with the device.

15. A container or dispenser (60) fitted with or comprising an indicator device (D) as claimed in any of the preceding claims.

## Patentansprüche

1. Anzeigervorrichtung (D), umfassend:
eine Basis (10);
ein erstes Anzeigerelement (30), das bezüglich der Basis zwischen einer ersten Position, die einen ersten Zustand oder Status anzeigt, und einer zweiten Position, die einen zweiten Zustand oder Status der Vorrichtung anzeigt, verschiebbar ist;
**gekennzeichnet durch**:
lösbare Rückhaltemittel (40), die an der Basis angebracht sind, um das erste Anzeigerelement in der ersten Position zu halten; und
Freigabemittel (40), die von der Basis (10) vorstehen und von außerhalb der Basis betätigbar sind, um die Rückhaltemittel freizugeben;
wobei sich das erste Anzeigerelement beim Lösen des Rückhaltemittels in Richtung der zweiten Position bewegt.

2. Anzeigervorrichtung nach Anspruch 1, wobei sich das erste Anzeigerelement (30) unter seinem Eigengewicht beim Freigeben der Rückhaltemittel in Richtung der zweiten Position bewegt.

3. Anzeigervorrichtung nach Anspruch 1 oder Anspruch 2, wobei das erste Anzeigerelement (30) bezüglich der Basis linear verschiebbar ist und optional,
wobei das erste Anzeigerelement (30) bezüglich der Basis in einer geraden Linie verschiebbar ist.

4. Anzeigervorrichtung nach einem der vorhergehenden Ansprüche, wobei das erste Anzeigerelement (30) bezüglich der Basis verschiebbar angeordnet ist.

5. Anzeigervorrichtung nach einem der vorhergehenden Ansprüche, umfassend eine elektronische Markierung (82), die angepasst ist, lesbare Informationen an eine Abfragevorrichtung zu übertragen, und ferner umfassend ein Abschirmmittel, das eine Kommunikation mit der elektronischen Markierung (82) verhindert, wobei das erste Anzeigermittel in seiner ersten Position ist und/oder
umfassend eine elektronische Markierung (80), die angepasst ist, um lesbare Informationen an eine Abfragevorrichtung zu übertragen, und ferner umfassend ein Abschirmmittel, das eine Kommunikation mit der elektronischen Markierung (80) verhindert, wobei das erste Anzeigermittel in seiner zweiten Position ist.

6. Anzeigervorrichtung nach Anspruch 5, wobei das erste Anzeigermittel (30) Abschirmmittel umfasst.

7. Anzeigervorrichtung nach Anspruch 5 oder Anspruch 6, wobei die elektronische Markierung (80, 82) angepasst ist, um Informationen zu übertragen, die einen Zustand oder einen Status anzeigen.

8. Anzeigervorrichtung nach einem der Ansprüche 5 bis 7, umfassend eine oder mehrere entfernbare und/oder austauschbare elektronische Markierungen und optional,
umfassend eine oder mehrere elektronische Markierungen (88', 90'), die auf einem Träger montiert sind, der lösbar mit der Vorrichtung verbindbar ist, und optional,
umfassend eine oder mehrere elektronische Markierungen (88', 90'), die auf einem Träger montiert sind, der gleitend mit der Vorrichtung in Eingriff gebracht werden kann.

9. Anzeigervorrichtung nach einem der vorhergehenden Ansprüche, wobei in der ersten Position des ersten Anzeigerelements (30) ein zweiter Anzeiger (27) verborgen ist und in der zweiten Position des ersten Anzeigerelements (30) der zweite Anzeiger (27) wenigstens teilweise freigelegt ist und optional,
wobei die Basis ein Fenster (26) umfasst, in dem das erste Anzeigerelement (30) verschiebbar ist und optional,
wobei, wenn das erste Anzeigerelement (30) in seiner zweiten Position ist, der zweite Anzeiger (27) wenigstens teilweise durch das Fenster (26) sichtbar ist.

10. Anzeigervorrichtung nach Anspruch 9, wobei das zweite Anzeigerelement (90) entfernbar und/oder austauschbar ist und optional,
wobei das zweite Anzeigerelement (90') eine elektronische Markierung trägt, die angepasst ist, um Informationen zu übertragen, die einen Zustand oder einen Status anzeigen, und/oder
wobei, wenn das erste Anzeigerelement (30) in der ersten Position ist, es im Wesentlichen das gesamte Fenster (26) einnimmt.

11. Anzeigervorrichtung nach Anspruch 9 oder 10, ferner umfassend ein drittes Anzeigerelement (28), das bezüglich der Basis zwischen einer ersten Position und einer zweiten Position verschiebbar ist und optional,
wobei, wenn das dritte Anzeigerelement (28) in seiner zweiten Position ist, es den zweiten Anzeiger (27) wenigstens teilweise verdeckt, und/oder
wobei das dritte Anzeigerelement (28) bezüglich der Basis linear verschiebbar ist und optional,
wobei das dritte Anzeigerelement (28) bezüglich der Basis in einer geraden Linie verschiebbar ist.

12. Anzeigervorrichtung nach Anspruch 11, wobei das dritte Anzeigerelement (28) bezüglich der Basis gleitend angeordnet ist und/oder
wobei das dritte Anzeigerelement (28) in dem Fenster (26) beweglich ist.

13. Anzeigervorrichtung nach Anspruch 11 oder 12, umfassend eine elektronische Markierung (82), die angepasst ist, um lesbare Informationen an eine Abfragevorrichtung zu übertragen, und ferner umfassend ein Abschirmmittel, das die Kommunikation mit der elektronischen Markierung verhindert, wenn das dritte Anzeigerelement (28) in seiner ersten Position ist, und/oder
umfassend eine elektronische Markierung (84), die angepasst ist, um lesbare Informationen an eine Abfragevorrichtung zu übertragen, und ferner umfassend ein Abschirmmittel, das eine Kommunikation mit der elektronischen Markierung verhindert, wenn das dritte Anzeigermittel (28) in seiner zweiten Position ist, und optional,
wobei die elektronische Markierung (82, 84) angepasst ist, um die Informationen zu übertragen, die einen Zustand oder einen Status anzeigen, und/oder
wobei das dritte Anzeigerelement (28) Abschirmmittel umfasst.

14. Anzeigervorrichtung nach Anspruch 13, wobei die elektronische Markierung entfernbar und/oder austauschbar ist und optional,
wobei die elektronische Markierung auf einem Träger (88', 90') montiert ist, der lösbar mit der Vorrichtung verbindbar ist und optional,
wobei die elektronische Markierung auf einem Träger (88' 90') montiert ist, der gleitend mit der Vorrichtung in Eingriff gebracht werden kann.

15. Behälter oder Spender (60), der mit einer Anzeigervorrichtung (D) nach einem der vorhergehenden Ansprüche ausgestattet ist oder diese umfasst.

## Revendications

1. Dispositif indicateur (D) comprenant :
une base (10) ;
un premier élément indicateur (30) pouvant se déplacer par rapport à la base entre une première position indicative d'une première condition ou état et une seconde position indicative d'une seconde condition ou état du dispositif ;
**caractérisé par** :
un moyen de retenue libérable (40) monté sur la base, destiné à retenir le premier élément indicateur dans la première position ; et
un moyen de libération (40) faisant saillie à partir de la base (10) et pouvant être actionné depuis l'extérieur de la base pour libérer le moyens de retenue ;
ledit premier élément indicateur se déplaçant vers la seconde position lors de la libération du moyen de retenue.

2. Dispositif indicateur selon la revendication 1, ledit premier élément indicateur (30) se déplaçant vers la seconde position sous son propre poids lors de la libération du moyen de retenue.

3. Dispositif indicateur selon la revendication 1 ou la revendication 2, ledit premier élément indicateur (30) pouvant se déplacer linéairement par rapport à la base et, éventuellement,
ledit premier élément indicateur (30) pouvant se déplacer en ligne droite par rapport à la base.

4. Dispositif indicateur selon l'une quelconque des revendications précédentes, ledit premier élément indicateur (30) étant disposé coulissant par rapport à la base.

5. Dispositif indicateur selon l'une quelconque des revendications précédentes, comprenant une étiquette électronique (82) adaptée pour émettre des informations lisibles vers un dispositif d'interrogation et comprenant en outre un moyen de blindage qui empêche la communication avec l'étiquette électronique (82) lorsque le premier moyen indicateur est dans sa première position, et/ou
comprenant une étiquette électronique (80) adaptée pour émettre des informations lisibles vers un dispositif d'interrogation et comprenant en outre un moyen de blindage qui empêche la communication avec l'étiquette électronique (80) lorsque le premier moyen indicateur est dans sa seconde position.

6. Dispositif indicateur selon la revendication 5, ledit premier moyen indicateur (30) comprenant un moyen de blindage.

7. Dispositif indicateur selon la revendication 5 ou la revendication 6, ladite étiquette électronique (80, 82) étant adaptée pour émettre des informations indicatives d'une condition ou d'un état.

8. Dispositif indicateur selon l'une quelconque des revendications 5 à 7, comprenant une ou plusieurs étiquettes électroniques amovibles et/ou remplaçables et, éventuellement,
comprenant une ou plusieurs étiquettes électroniques (88', 90') montées sur un support qui est peut être raccordé de manière libérable au dispositif et, éventuellement,
comprenant une ou plusieurs étiquettes électroniques (88', 90') montées sur un support qui peut se mettre en prise de manière coulissante avec le dispositif.

9. Dispositif indicateur selon l'une quelconque des revendications précédentes, dans la première position du premier élément indicateur (30) un deuxième indicateur (27) est caché et dans la seconde position du premier élément indicateur (30) le deuxième indicateur (27) est au moins partiellement exposé et, éventuellement,
ladite base comprenant une fenêtre (26) dans laquelle le premier élément indicateur (30) peut être déplacé et, éventuellement,
lorsque le premier élément indicateur (30) est dans sa seconde position, ledit deuxième indicateur (27) étant au moins partiellement visible à travers la fenêtre (26).

10. Dispositif indicateur selon la revendication 9, ledit deuxième élément indicateur (90) étant amovible et/ou remplaçable et, éventuellement,
ledit deuxième élément indicateur (90') portant une étiquette électronique adaptée pour émettre des informations indicatives d'une condition ou d'un état et/ou
lorsque le premier élément indicateur (30) est dans la première position, ce-dernier occupant sensiblement la totalité de la fenêtre (26).

11. Dispositif indicateur selon la revendication 9 ou 10, comprenant en outre un troisième élément indicateur (28), pouvant se déplacer par rapport à la base entre une première position et une seconde position et, éventuellement,
lorsque le troisième élément indicateur (28) est dans sa seconde position, ce-dernier masquant au moins partiellement le deuxième indicateur (27), et/ou
ledit troisième élément indicateur (28) pouvant se déplacer linéairement par rapport à la base et, éventuellement,
ledit troisième élément indicateur (28) pouvant se déplacer en ligne droite par rapport à la base.

12. Dispositif indicateur selon la revendication 11, ledit troisième élément indicateur (28) étant disposé coulissant par rapport à la base, et/ou
ledit troisième élément indicateur (28) étant mobile dans la fenêtre (26).

13. Dispositif indicateur selon la revendication 11 ou 12, comprenant une étiquette électronique (82) adaptée pour émettre des informations lisibles vers un dispositif d'interrogation et comprenant en outre un moyen de blindage qui empêche la communication avec l'étiquette électronique lorsque le troisième élément indicateur (28) est dans sa première position, et/ou,
comprenant une étiquette électronique (84) adaptée pour émettre des informations lisibles vers un dispositif d'interrogation et comprenant en outre un moyen de blindage qui empêche la communication avec l'étiquette électronique lorsque le troisième élément indicateur (28) est dans sa seconde position et, éventuellement,
ladite étiquette électronique (82, 84) étant adaptée pour émettre des informations indicative d'une condition ou d'un état, et/ou
ledit troisième élément indicateur (28) comprenant un moyen de blindage.

14. Dispositif indicateur selon la revendication 13, ladite étiquette électronique étant amovible et/ou remplaçable et, éventuellement,
ladite étiquette électronique étant montée sur un support (88', 90') qui peut être raccordé de manière libérable au dispositif et, éventuellement,
ladite étiquette électronique étant montée sur un support (88', 90') qui peut se mettre en prise de manière coulissante avec le dispositif.

15. Récipient ou distributeur (60) équipé d'un dispositif indicateur (D) ou comprenant celui-ci selon l'une quelconque des revendications précédentes.
